**Europäisches Patentamt**

(19) **European Patent Office**

**Office européen des brevets**

(11) Numéro de publication: **0 186 580**
**B1**

(12) # FASCICULE DE BREVET EUROPÉEN

(45) Date de publication du fascicule du brevet:
08.03.89

(51) Int. Cl.⁴: **F 16 D 25/08,** F 16 D 25/14,
F 15 B 9/10

(21) Numéro de dépôt: **85402501.2**

(22) Date de dépôt: **16.12.85**

(54) Servomoteur à fluide sous pression.

(30) Priorité: **20.12.84 FR 8419538**

(43) Date de publication de la demande:
**02.07.86 Bulletin 86/27**

(45) Mention de la délivrance du brevet:
**08.03.89 Bulletin 89/10**

(84) Etats contractants désignés:
**DE GB IT SE**

(56) Documents cité:
**FR-A-2 134 728**
**FR-A-2 516 179**

(73) Titulaire: **WABCO WESTINGHOUSE**
**EQUIPEMENTS AUTOMOBILES S.A., 44 Avenue**
**Aristide Briand, F-77410 Claye Souilly (FR)**

(72) Inventeur: **Ragot, Paul, 27 Boulevard du Nord,**
**F-93340 Le Raincy (FR)**
Inventeur: **l'Her, Didier, 11 Allée Alice, F-93140**
**Bondy (FR)**

(74) Mandataire: **Hirsch, Marc- Roger, Cabinet Hirsch**
**34 rue de Bassano, F-75008 Paris (FR)**

LIBER, STOCKHOLM 1989

## Description

La présente invention s'applique à un servomoteur à fluide sous pression utilisable notamment pour la commande assistée d'un organe mobile tel qu'un levier d'embrayage, du type comportant dans un corps de cylindre d'assistance un piston d'assistance agissant sur ledit organe et susceptible d'être soumis à la pression du fluide sous pression délivré par un détendeur d'assistance autorégulé inclus dans le piston d'assistance, la liaison entre une pédale ou un levier d'actionnement manuel du servomoteur et le piston d'assistance étant constituée par une tige d'assistance montée à l'intérieur du piston d'assistance et solidaire du poussoir d'actionnement du détendeur d'assistance, la tige d'assistance, mobile à l'antérieur du piston d'assistance sous l'action de la pédale, étant susceptible de venir en appui unilatéral sur une surface d'appui correspondante ménagée dans le piston d'assistance, lorsque le clapet du détendeur d'assistance est en position de pleine ouverture, pour suivre dans sa course le piston d'assistance qui vient en appui sur le levier d'embrayage.

Un tel servomoteur d'embrayage est décrit dans FR-A-2 516 179 où le piston d'assistance est susceptible, au cours de la rotation du levier d'embrayage de se débattre d'un angle important à l'intérieur du cylindre tout en étant protégé des pollutions extérieures par des moyens de liaison étanches interposés entre la tige du piston et le corps du cylindre solidaire du carter de l'embrayage et où le piston d'assistance vient en appui unilatéral sur la surface de butée du levier d'embrayage par l'intermédiaire d'une surface de butée extérieure.

A l'expérience, les servomoteurs de ce type utilisés pour la commande de débrayage des véhicules routiers lourds et actionnés directement par la pression pneumatique du réseau d'air comprimé du circuit de freinage du véhicule, ne permettent pas d'obtenir un commande exempte de vibrations à l'ouverture du clapet du détendeur d'assistance. De plus, dans l'ambiance du carter d'embrayage soumis à un champ de vibrations intense, le conducteur du véhicule éprouve souvent des difficultés à obtenir un réembrayage progressif et surtout à couper les tendances à l'accrochage de l'embrayage. Ces coupures qui s'obtiennent aisément avec les servo débrayages à commande oléopneumatique nécessitent la réalimentation à une pression d'assistance faible et bien dosée du moteur de servo débrayage afin de bien stabiliser le couple d'embrayage au cours du patinage, pour réaliser un démarrage en côte par exemple. La section de passage importante du clapet du détendeur et la liaison quasi directe de ce détendeur avec le cylindre d'assistance n'autorisent pas cette réalimentation bien dosée et amortie du cylindre d'embrayage au cours de la phase d'échappement du cylindre d'assistance afin de stabiliser rapidement le couple transmis par l'embrayage.

La présente invention a notamment pour but de pallier ces difficultés de sensibilité et d'amortissement des cylindres d'assistance à air comprimé ou à huile basse pression, en particulier pour la commande des embrayages des véhicules industriels.

A cet effet, le détendeur d'assistance comporte un bloc clapet à deux sections de passage distinctes à l'admission du fluide sous pression dans le cylindre d'assistance, et la plus petite des deux sections de passage est susceptible d'être ouverte pour une première course de commande de la tige d'assistance tandis que la plus grande des deux sections de passage est susceptible d'être ouverte après une deuxième course de la tige d'assistance venant s'ajouter à la première course et au moins un clapet du bloc clapet est susceptible, après la réalisation de ladite deuxième course, de venir en butée sur le piston d'assistance pour obliger celui-ci à suivre le déplacement de la tige d'assistance.

La grande section de passage est en général susceptible d'être ouverte uniquement après l'application par la tige d'assistance d'un effort supérieur d'une valeur significative à celui permettant d'ouvrir la plus petite section de passage, de manière à limiter encore plus les occasions d'ouverture de la grande section de passage.

L'existence du clapet à petite section de passage et à ouverture aisée, grâce en général à un bon équilibrage du clapet par rapport à la pression de la source de fluide, permet de réalimenter de façon bien dosée le cylindre d'assistance en cours d'échappement pendant la phase d'embrayage et de stopper ainsi, très rapidement, la tendance à "l'accrochage" de l'embrayage qui provoque des réactions de transmission désagréables et souvent le calage du moteur du véhicule au démarrage de celui-ci. L'existence du clapet à grande section de passage permet de débrayer très rapidement au cours du passage de différents rapports de la boîte de vitesse et d'éviter qu'il n'existe une phase pendant laquelle la pédale de commande du débrayage "attend" en quelque sorte l'assistance. Les sections d'échappement des deux clapets du détendeur peuvent être différentes, la section d'échappement du clapet à petite section de passage étant bien entendu la plus faible. L'expérience montre que l'utilisation d'une section de passage unique à l'échappement ne cause pas de difficultés particulières si l'échappement est bien amorti car le réembrayage doit toujours être plus lent que le débrayage.

Selon un autre mode de réalisation particulièrement compact et avantageux du servomoteur selon l'invention, le bloc clapet du détendeur d'assistance comporte deux clapets annulaires concentriques traversés par la tige d'assistance, montés télescopiquement l'un à l'extérieur de l'autre et dont la surface d'étanchéité annulaire de chacun est susceptible de venir en appui sous l'action d'un ressort d'obturation sur un siège annulaire d'étanchéité, le clapet le plus à l'intérieur et susceptible d'ouvrir la plus petite section de passage étant sensiblement équilibré par rapport à la pression de la source de fluide sous pression et susceptible d'une part d'être repoussé à l'encontre de son ressort d'obturation par le poussoir d'actionnement du détendeur obturant en même temps la mise à l'échappement du détendeur, et d'autre part de se décoller ensuite de son siège annulaire d'étanchéité pour relier au cylindre d'assistance une chambre intermédiaire délimitée entre les deux clapets et reliée à la source de fluide sous pression par un passage étranglé définissant principalement la plus petite section de passage, et la poursuite de la course d'ouverture du poussoir d'actionnement est susceptible d'appliquer le clapet le plus à l'intérieur en butée sur l'autre des deux clapets, et à provoquer la séparation de cet autre clapet de son siège annulaire d'étanchéité pour relier, en court circuit dudit passage étranglé à travers la grande section de passage, la source de fluide sous pression à la chambre de pression du cylindre d'assistance. Le passage étranglé est avantageusement un trou calibré ménagé radialement dans la paroi latérale du clapet le plus à l'extérieur, dans une zone où cette paroi présente une épaisseur minimale.

Selon encore un autre mode de réalisation, le clapet le plus intérieur porte, à sa périphérie de façon étanche, l'autre clapet sur une portée cylindrique extérieure (dudit clapet le plus intérieur) présentant sensiblement le même diamètre que celui de la surface annulaire d'étanchéité de son siège d'étanchéité, de manière à équilibrer ledit clapet le plus intérieur par rapport à la pression de la source de fluide sous pression et la surface du siège annulaire d'étanchéité de l'autre clapet est supérieure à celle du clapet le plus intérieur pour délimiter ainsi une chambre intermédiaire à deux surfaces annulaires d'étanchéité concentriques et distinctes de manière qu'immédiatement après l'ouverture du clapet intérieur, la pression s'abaisse dans cette chambre intermédiaire alors reliée au cylindre d'assistance par une relativement grande section de passage annulaire ouverte entre le siège annulaire d'étanchéité et la surface d'étanchéité annulaire dudit clapet intérieur, tandis que la chambre intermédiaire n'est reliée à la source de fluide sous pression qu'à travers le passage étranglé et qu'ainsi la fermeture du clapet le plus à l'extérieur par son ressort d'obturation soit confirmée par la pression de source de fluide après l'ouverture du clapet le plus intérieur et que l'ouverture de ce clapet le plus extérieur à grande section de passage soit rendue temporairement plus difficile.

Selon ce mode de réalisation, le ressort d'obturation du clapet le plus à l'intérieur est en appui sur le clapet le plus à l'extérieur et susceptible d'obturer la plus grande section de passage et ce clapet le plus à l'extérieur est repoussé en position de fermeture par son ressort d'obturation à l'encontre de la réaction dudit ressort d'obturation du clapet le plus à l'intérieur par une force de réaction suffisante pour interdire l'ouverture du clapet le plus à l'extérieur sous le seul effet de la réaction du ressort d'obturation du clapet le plus à l'intérieur combinée aux réactions de frottement exercées entre les deux clapets concentriques.

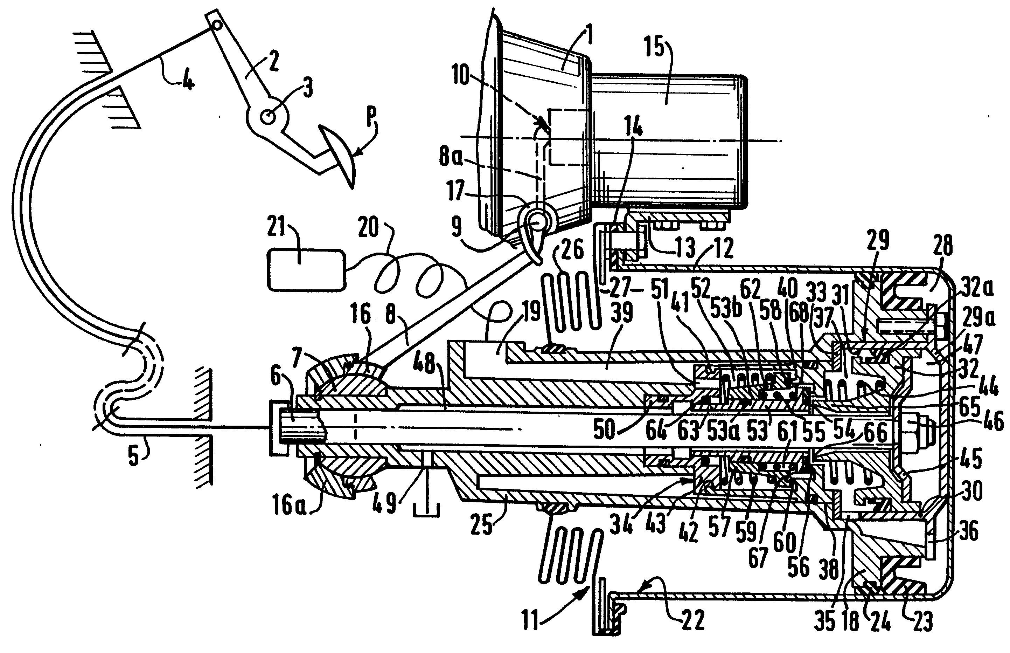

D'autres buts, avantages et caractéristiques de l'invention apparaîtront à la lecture de la description d'un mode de réalisation de l'invention, faite en regard du dessin annexé où la figure unique représente en coupe schématique un système de commande d'embrayage doté d'un servomoteur d'assistance de débrayage selon l'invention.

Le système de commande d'embrayage représenté sur la figure, est interposé entre un carter d'embrayage 1, fixé au moteur du véhicule, et une pédale de débrayage 2, articulée sur un axe 3 à l'intérieur de la cabine de conduite du véhicule. La pédale 2 présente une tête en forme de champignon ou de plaque sur laquelle le conducteur appuie avec le pied pour provoquer un effort de pression P qui fait pivoter la pédale 2 autour de son axe 3 en entraînant en traction un câble 4 qui est logé dans une gaine souple 5 bloquée à ses deux extrémités et qui est relié à une tige d'actionnement et d'assistance 6 pour venir appliquer une portée sphérique d'actionnement 7 sur un levier de débrayage 8 articulé en 9 sur le carter d'embrayage 1. Un autre bras 8a du levier 8 vient s'appliquer sur une butée de débrayage 10, représentée en traits pointillés sur la figure et susceptible de repousser le ressort principal de l'embrayage en position débrayée pour laquelle les plateaux de friction non représentés de l'embrayage ne sont plus soumis à une pression élastique capable d'engendrer un couple d'embrayage significatif.

Un cylindre d'assistance 11 formant servomoteur est fixé au carter d'embrayage 1 par son corps de cylindre monobloc 12 et par tout moyen tel qu'une patte de fixation 13, boulonnée respectivement sur une plaque de sortie 14 du corps de cylindre 12 réalisé par exemple en tôle mince emboutie et sur le carter de la boîte de vitesse 15 voisine du corps d'embrayage 1. Le levier 8 présente une partie inférieure 16 en forme de rotule assemblée par une bague vissée 16a sur la portée d'actionnement sphérique 7 et est rappelé vers la position débrayée par un ressort spiral 17 enroulé autour de l'axe 9.

Un piston d'assistance 18 qui porte la tige 6, est monté dans le corps de cylindre 12 et est relié par un orifice d'admission 19 et un conduit flexible 20 à un réservoir de fluide sous, pression 21 constitué généralement par un réservoir d'air comprimé, alimenté par un compresseur d'air non représenté.

L'ensemble servomoteur constitué par le piston d'assistance 18, est monté coulissant dans l'alésage 22 du corps de cylindre 12, au contact duquel son étanchéité est assurée par un joint d'étanchéité annulaire à lèvres 23 coopérant avec un anneau de guidage 24. La tige 25 du piston 18 n'est pas guidée à l'extrémité de gauche du cylindre 11 et peut ainsi louvoyer ou se débattre d'un angle important à l'intérieur du cylindre. La tige 25 est reliée élastiquement au rebord extérieur du corps de cylindre 12 par un soufflet en élastomère 26 qui forme, avec l'espace annulaire tampon entre la surface extérieure de la tige 25 et l'alésage 22, une chambre de respiration 27 reliée à l'atmosphère extérieure par des moyens de filtration.

Le piston d'assistance 18 réalisé de préférence dans un bloc de métal léger, comporte, pour réaliser la valve du servomoteur, diverses cavités intérieures. Sur la face du piston 18 regardant la chambre de pression 28 du cylindre 12, une cavité cylindrique 29 de relativement grand diamètre est obturée par un chapeau 29a fixé par des vis sur le piston 18 et qui présente une partie cylindrique en forme de manchon 30 dont l'alésage intérieur 31 reçoit un piston de réaction 32 muni d'un joint d'étanchéité annulaire à lèvres 32a. La partie cylindrique 30 formant manchon emprisonne au fond de la cavité cylindrique 29 une rondelle de retenue 33 d'un bloc clapet 34 et présente, au voisinage de cette rondelle, au moins un passage 35 qui constitue avec, au moins un passage 36 ménagé à travers le chapeau 29a, une liaison permanente entre, d'une part, la chambre de détendeur 37 du bloc clapet 34, délimitée par le piston de réaction 32 et, d'autre part, la chambre de pression 28 du cylindre 12.

La cavité cylindrique 29 est suivie en direction de la tige de piston 25 par une cavité cylindrique 38 de plus petit diamètre et qui se prolonge par une cavité effilée 39 reliée à l'orifice 19 d'alimentation en air comprimé. La cavité 38 reçoit une pièce porte-sièges de clapet 40 en forme de manchon dont la partie dirigée vers la tige de piston 25 et de relativement faible épaisseur est rétreinte pour engager sa collerette intérieure 41 dans une rainure 42 d'une pièce de fond 43 du bloc porte-clapets 34. La face de la pièce 40 qui regarde la chambre de détendeur 37, sert d'appui à un ressort de rappel 44 qui repousse le piston de réaction 32 au contact d'une rondelle d'appui 45 fixée par un écrou 46 sur la tige 6 qui traverse la tige de piston 25 et le piston de réaction 32 d'une façon non étanche, pour relier à l'atmosphère une chambre 47 délimitée entre le chapeau 29a et le piston de réaction 32. La mise à l'atmosphère de l'espace annulaire d'échappement 48 ménagé autour de la tige 6 s'effectue grâce à une ouverture de mise à l'atmosphère 49 qui peut être étranglée par un orifice calibré pour réduire la vitesse de réembrayage.

La pièce de fond 43 présente d'une part, en direction de la tige de piston 25, un prolongement annulaire 50 qui engagé de façon étanche dans un alésage récepteur de la tige de piston et, d'autre part, au moins un passage 51 reliant la chambre de pression 52 du bloc clapet 34 à la cavité 39 qui est obturée du côté de la chambre de détendeur 37 par un joint annulaire porté par la pièce 40. La chambre de pression 52 du bloc clapet 34 reçoit deux clapets concentriques: un clapet intérieur 53 en forme de bague allongée et dont la garniture d'étanchéité annulaire en élastomère 54 est repoussée par un ressort de fermeture 55 sur un siège de clapet intérieur 56 ménagé à l'intérieur de la pièce 40 et un clapet extérieur 57 dont la garniture d'étanchéité annulaire en élastomère 58 est repoussée par un ressort de rappel 59 en appui sur la pièce de fond 43, sur un siège de clapet extérieur 60 ménagé à l'intérieur de la pièce 40. Le clapet extérieur 57 est guidé de façon étanche (par un joint 53a) sur la surface cylindrique extérieure du clapet intérieur formant portée 53b de façon à délimiter avec le clapet intérieur 53, entre les deux sièges de clapet 56 et 60, une chambre de pression intermédiaire 61 qui est reliée à la chambre de pression principale 52 par un orifice calibré 62 ménagé à travers la paroi annulaire mince du clapet extérieur 57. Le ressort de fermeture 55 du clapet intérieur 53 est en appui sur le clapet extérieur 57 à l'encontre du ressort de rappel 59 qui présente une plus grande force de réaction et qui est ainsi capable de repousser les deux clapets concentriques 53 et 57 en position de fermeture sur leurs sièges annulaires concentriques respectifs 56 et 60, même à l'encontre des réactions de frottement s'exerçant entre ces clapets concentriques 53 et 57.

La fermeture de la chambre de pression 52 du bloc clapet 34 par rapport à l'espace annulaire d'échappement 48 est complétée par un engagement permanent de guidage d'un prolongement 63 du clapet intérieur 53 dans un alésage correspondant de la pièce de fond 43, avec interposition d'un joint d'étanchéité 64. Le piston de réaction 32 se prolonge en direction du clapet intérieur 53 par un poussoir annulaire 65 dont l'extrémité effilée 66 est susceptible de venir en appui de façon étanche sur le siège annulaire en élastomère 54 du clapet intérieur 53.

Comme on peut aisément l'imaginer, le montage du servomoteur s'effectue en préparant d'abord le bloc clapet 34 par introduction des clapets concentriques 53 et 57 repoussés au contact de leurs sièges 56 et 60 sur la pièce 40 par les ressorts de rappel 55 et 59, suivie d'une fermeture de la chambre de pression 52 par la pièce de fond 43 qui est ensuite emprisonnée par le rétreint de la collerette 41. Le piston d'assistance 18 est ensuite préparé avec sa tige 25 en introduisant successivement dans les alésages concentriques intérieurs de cette tige 25: le bloc clapet 34, la rondelle 33, la tige 6 sur laquelle est fixé le piston de réaction 32, et enfin en fixant le chapeau 29a après engagement de l'alésage 31 du manchon 30 au contact de la lèvre extérieure du joint d'étanchéité 32a. Pour compléter le montage du servomoteur 11, il reste à garnir le piston 18 de ses joints d'étanchéité extérieurs 23 et 24 et à introduire ce piston 18 dans le cylindre 12, puis à monter le soufflet d'étanchéité 26. Lorsque le servomoteur est mis en place sur l'embrayage du véhicule, l'orifice 19 est raccordé à la conduite 20, la tige 6 est reliée au câble 4 et le levier de débrayage 8 est raccordé rotulant sur la portée sphérique 7 par vissage de la bague 16a.

Le fonctionnement du mode de réalisation de l'invention qui vient d'être décrit va maintenant être explicité en référence à la figure. Dans la position de repos du servomoteur telle que représentée sur la figure, le moteur du véhicule est embrayé sur la transmission et le puissant ressort de serrage de l'embrayage repousse, par la butée 10, le levier de débrayage 8 vers la droite de la figure avec la tige de piston 25 en mettant le piston d'assistance 18 en butée sur le fond du cylindre 12 par les vis de fixation du chapeau 29a. Le ressort de rappel de la pédale 2, non représenté, relâche le câble 4 dans la position de la figure et libère la tige 6 qui est rappelée vers la droite de la figure par le ressort de rappel 44 du piston de réaction 32. La chambre de pression 28 est ainsi reliée à l'atmosphère via les passages 35 et 36 et l'espace annulaire d'échappement 48.

Lorsque le conducteur du véhicule désire débrayer, il appuie sur la pédale 2 selon la flèche P et tire ainsi le câble 4 et la tige 6 vers la gauche de la figure. Le piston de réaction 32 se déplace également vers la gauche car la portée sphérique 7 est en appui relativement rigide sur la rotule 16 du levier 8. En se déplaçant vers la gauche, le poussoir annulaire 65 du piston de réaction 32 vient en appui par son extrémité effilée 66 sur la garniture en élastomère 54 du clapet 53 et isole les chambres de détendeur 37 et de pression 28 de l'atmosphère. Le déplacement du piston 32 se poursuivant vers la gauche, la pression du poussoir 65 décolle la garniture en élastomère 54 (du clapet 53) du siège de clapet intérieur 56 ménagé sur la pièce 40 et l'air comprimé du réservoir 21 s'écoule via la flexible 20, l'orifice 19, la cavité 39, le passage 51, la chambre de pression 52, l'orifice calibré 62, la chambre de pression intermédiaire 61, le passage annulaire entre le clapet 53 ouvert et le siège 56 de la pièce 40, la chambre de détendeur 37 et les passages 35 et 36, jusque dans la chambre de pression 28 du cylindre 12 pour repousser le piston d'assistance 18 vers la gauche au contact de la rotule 16 afin de faire tourner le levier de débrayage 8 autour de son axe 9 et de repousser la butée de débrayage 10 jusqu'à sa position de fin de course. Pendant toute la course du piston 18 vers la gauche, le conducteur reçoit une information sur la pression d'alimentation par l'effort de réaction exercé par la pression d'assistance sur le piston de réaction 32, la pression régnant dans la chambre de détendeur 37 repoussant également vers la gauche la tige de piston 25 avec une force de pression égale et de sens opposé à celle agissant sur le piston de réaction 32.

Le débit d'air comprimé étant étranglé par l'orifice calibré 62, dès que le levier 8 est en appui sur la butée d'embrayage 10, le déplacement du câble 4 vers la gauche de la figure sous l'effet de l'effort exercé sur la pédale 2, est plus rapide que le déplacement du piston 18 freiné par la réaction du ou des ressorts d'embrayage. Il s'ensuit que la tige 6 continue de se déplacer vers la gauche après l'ouverture du clapet 53, à l'encontre de la réaction du ressort de rappel 55 de ce clapet. La butée annulaire de dos 67 du clapet 53 vient alors en appui sur la périphérie intérieure 68 du clapet extérieur 57 qui s'ouvre en libérant une grande section annulaire de passage entre la garniture 58 et le siège annulaire 60 ménagé sur la pièce 40. L'air comprimé du réservoir 21 peut alors s'écouler à grand débit dans la chambre de pression 28 pour obliger la tige de piston 25 à se déplacer vers la gauche aussi rapidement que le câble 4, de manière à réaliser un débrayage rapide.

Si le conducteur relâche partiellement son effort P sur la pédale 2, la traction exercée vers la gauche sur la tige 6 diminue et n'est plus en mesure d'équilibrer l'effort de réaction exercé par la pression d'assistance sur le piston de réaction 32 qui se déplace alors légèrement vers la droite jusqu'a permettre au clapet extérieur 57 de se fermer a nouveau sur son siège 60. La montée de la pression pneumatique dans la chambre d'assistance 28 se ralentit considérablement et si le conducteur relâche encore plus son effort P sur la pédale 2, par exemple pour commander une opération de réembrayage progressif, le clapet intérieur 53 se ferme à son tour sur son siège 56 puis le piston de réaction 32 se déplace encore plus vers la droite et la partie effilée 66 du poussoir annulaire 65 se décolle de la garniture élastomère 54 du clapet intérieur 53. La chambre de détendeur 37 est alors reliée à l'échappement comme décrit précédemment et représenté sur la figure. L'échappement de l'air comprimé contenu dans la chambre de pression 28 se produit de façon progressive car l'ouverture de mise à l'atmosphère 49 limite le débit d'air vers l'atmosphère et assure un retour relativement lent du levier de débrayage 8 vers la position d'embrayage représentée sur la figure.

Lorsque le conducteur désirer procéder à un réembrayage progressif du véhicule, par exemple au démarrage de celui-ci, notamment en côte, il relâche progressivement non pas l'effort P qui est difficile à doser mais la course de la pédale 2. Du fait des frottements et des relaxations entre le câble 4 et sa gaine 5, il s'ensuit un relâchement saccadé de la tige 6 et, en général, un embrayage très rapide qui tend à caler le moteur du véhicule et en général à fatiguer les organes de la transmission. Lorsque le conducteur "sent" que l'embrayage est trop brutal, il réagit en réappuyant modérément sur la pédale de débrayage 2, ce qui a pour effet de réappliquer la partie effilée 66 du poussoir 65 sur la garniture 54 et d'ouvrir à nouveau le clapet 53 pour réalimenter à faible débit la chambre de pression 28 et stabiliser ainsi le couple d'embrayage relativement fluctuant en fonction de la vitesse de frottement entre la garniture de friction du disque d'embrayage et les portées de cette garniture.

Au cours de ces opérations de réembrayage, le clapet extérieur à grand débit peut, en effet, difficilement être ouvert du fait des propriétés particulières du bloc clapet 34 selon l'invention et que l'on va maintenant expliciter. Après l'ouverture du clapet intérieur 53, la chambre de pression intermédiaire 61 est reliée à travers un passage annulaire de relativement grande section à la chambre de détendeur 37 et à la chambre de pression 28 alors qu'elle n'est reliée à la chambre de pression 52, et par là au réservoir d'air comprimé 21, qu'à travers l'orifice calibré 62. Il s'ensuit que la pression dans cette chambre intermédiaire 61 s'égalise pratiquement avec la pression régnant dans la chambre de pression 28 immédiatement après l'ouverture du clapet intérieur 53 et que la surpression régnant dans la chambre de pression 52 et agissant sur la section annulaire du clapet extérieur 57 confirme la fermeture de ce clapet 57 par le ressort de rappel 59 et rend son ouverture beaucoup plus difficile après l'ouverture du clapet intérieur 53. On comprend dès lors pourquoi, au moment d'un débrayage normal, c'est-à-dire rapide, les deux clapets concentriques d'alimentation de la chambre de pression 28 sont ouverts simultanément alors qu'au cours des opérations de réembrayage progressif, les réalimentations éventuelles de la chambre de pression 28 s'effectuent uniquement via le clapet intérieur à débit limité par l'orifice calibré 62.

Ainsi, dans l'hypothèse où des vibrations, notamment de relaxation, apparaissent dans l'embrayage, par exemple par suite du broutement des garnitures d'embrayage sur leurs surfaces de friction, ces vibrations se transmettent difficilement au servomoteur par suite des diverses réactions de friction existant sur les pistons de réaction et d'assistance et de l'amortissement pneumatique causé par les pertes de charge à l'alimentation et à l'échappement entre les diverses chambres pneumatiques du servomoteur.

Bien entendu, la présente n'est pas limitée aux modes de réalisation décrits et représentés et elle est susceptible de nombreuses variantes accessibles à l'homme de l'art sans que l'on ne s'écarte de l'esprit de l'invention.

Ainsi, on droit comprendre que sur les véhicules où l'on ne dispose pas de source d'air comprimé mais seulement d'une source d'huile à basse pression, telle que celle fournie par la pompe d'assistance de direction, on peut relier le flexible 20 à cette source d'huile sous pression et l'ouverture 49 ainsi que la chambre de respiration 27 au retour vers la bâche ou le réservoir d'huile. Dans la disposition selon la figure, le servomoteur est fixé sur le côté de, la boîte de vitesse 15 et une fuite d'huile d'assistance ne risquerait pas de produire des effets dommageables sur l'embrayage car cette fuite s'écoulerait directement sur le chemin de roulement du véhicule sans pénétrer dans l'embrayage.

Dans un autre ordre d'idée, la tige d'assistance 6 est représentée sur la figure disposée concentriquement au piston 18 mais on peut envisager, pour diverses raisons constructives, de placer la tige 6 et le bloc clapet 34 avec le piston de réaction 32, excentrés par rapport au piston d'assistance 18 qui agirait, lui, de façon sensiblement centrée sur le levier 8 qui se déplace en rotation autour de l'axe 9.

## Revendications

1. Servomoteur à fluide sous pression, utilisable notamment pour la commande assistée d'un organe mobile tel qu'un levier de débrayage (8), du type comportant dans un corps (12) de cylindre d'assistance (11) un piston d'assistance (18) agissant sur ledit organe et susceptible d'être soumis à la pression du fluide sous pression délivré par un détendeur d'assistance autorégulé inclus dans le piston d'assistance (18), la liaison entre une pédale (2) ou un levier d'actionnement manuel du servomoteur et le piston d'assistance étant constituée par une tige d'assistance (6) montée à l'intérieur du piston d'assistance et solidaire d'un poussoir d'actionnement (65) du détendeur d'assistance, la tige d'assistance (6), mobile à l'intérieur du piston d'assistance (18) sous l'action de la pédale (2), étant susceptible de venir en appui unilatéral sur une surface d'appui correspondante ménagée dans le piston d'assistance, lorsqu'un clapet du détendeur d'assistance est en position de pleine ouverture, pour suivre dans sa course le piston d'assistance (18) qui vient en appui sur le levier de débrayage (8), caractérisé en ce que le détendeur d'assistance comporte un bloc clapet (34) à deux sections de passage distinctes (62, 58, 60) à l'admission du fluide sous pression dans le cylindre d'assistance (11), et en ce que la plus petite (62) des deux sections de passage est susceptible d'être ouverte après une première course de commande de la tige d'assistance tandis que la plus grande (58, 60) des deux sections de passage est susceptible d'être ouverte après une deuxième course de la tige d'assistance (6) venant s'ajouter à la première course et en ce qu'au moins un clapet (57) du bloc clapet (34) est susceptible, après la réalisation de ladite deuxième course, de venir en butée sur le piston d'assistance (43, 18, 25) pour obliger celui-ci à suivre le déplacement de la tige d'assistance (6).

2. Servomoteur selon la revendication 1, caractérisé en ce que la grande section de passage (58, 60) est susceptible d'être ouverte uniquement après l'application par la tige d'assistance (6) d'un effort supérieur d'une valeur significative à celui permettant d'ouvrir la plus petite section de passage (62), de manière à limiter encore plus les occasions d'ouverture de la grande section de passage.

3. Servomoteur selon l'une des revendications 1 ou 2, caractérisé en ce que le bloc clapet (34) du détendeur d'assistance comporte deux clapets annulaires concentriques (53, 57) traversés par la tige d'assistance (6), montés télescopiquement l'un à l'extérieur de l'autre et dont la surface d'étanchéité annulaire de chacun est susceptible de venir en appui, sous l'action d'un ressort d'obturation (55, 59), sur un siège annulaire d'étanchéité (56, 60), le clapet le plus à l'intérieur (53) susceptible d'ouvrir la plus petite section de passage (62) étant sensiblement équilibré par rapport à la pression de la source de fluide sous pression (21) et susceptible d'une part d'être repoussé à l'encontre de son ressort d'obturation (55) par le poussoir d'actionnement (65, 66) du détendeur obturant en même temps la mise à l'échappement du détendeur et d'autre part de se décoller ensuite de son siège annulaire d'étanchéité (56) pour relier au cylindre d'assistance (12) une chambre intermédiaire (61) délimitée entre les deux clapets (53, 57) et reliée à la source (21) de fluide sous pression par un passage étranglé (62) définissant principalement la plus petite section de passage et en ce que la poursuite de la course d'ouverture du poussoir d'actionnement (65, 66) est susceptible d'appliquer le clapet le plus à l'intérieur (53) en butée sur l'autre (57) des deux clapets et à provoquer la séparation de cet autre clapet de son siège annulaire d'étanchéité (60) pour relier, en court circuit dudit passage étranglé (62) à travers la grande section de passage (58, 60), la source de fluide sous pression (21) à la chambre de pression (28) du cylindre d'assistance (12).

4. Servomoteur selon la revendication 3, caractérisé en ce que le passage étranglé est un trou calibré (62) ménagé radialement dans la paroi latérale du clapet le plus à l'extérieur (57) dans une zone où cette paroi présente une épaisseur minimale.

5. Servomoteur selon l'une des revendications 3 ou 4, caractérisé en ce que le clapet le plus intérieur (53) porte, à sa périphérie et de façon étanche, l'autre clapet (57) sur une portée cylindrique extérieure (53a, 53b) (dudit clapet le plus intérieur) présentant sensiblement le même diamètre que celui de la surface annulaire d'étanchéité de son siège d'étanchéité (56), de manière à équilibrer ledit clapet le plus intérieur (53) par rapport à la pression de la source de fluide sous pression (21) et en ce que la surface du siège annulaire d'étanchéité (60) de l'autre clapet est supérieure à celle du clapet le plus intérieur (53) pour délimiter ainsi une chambre intermédiaire (61) à deux surfaces annulaires d'étanchéité concentriques et distinctes, de manière qu'immédiatement après l'ouverture du clapet intérieur (53), la pression s'abaisse dans cette chambre intermédiaire (61) alors reliée à la chambre de pression (28) du cylindre d'assistance (12) par une relativement grande section de passage annulaire ouverte entre le siège annulaire d'étanchéité (56) et la surface d'étanchéité annulaire (54) dudit clapet intérieur (53), tandis que la chambre intermédiaire (61) n'est reliée à la source le fluide sous pression (21) qu'à travers le passage étranglé (62) et qu'ainsi la fermeture du clapet le plus à l'extérieur (57) par son ressort d'obturation (59) soit confirmée par la pression de la source de fluide (21) après l'ouverture du clapet le plus intérieur (53) et que l'ouverture de ce clapet le plus extérieur (57) à grande section de passage soit rendue temporairement plus difficile.

6. Servomoteur selon l'une des revendications 3 à 5, caractérisé en ce que le ressort d'obturation (55) du clapet le plus à l'intérieur (53) est en appui sur le clapet le plus à l'extérieur (57) susceptible d'obturer la plus grande section de passage et en ce que ce clapet le plus à l'extérieur (57) est repoussé en position de fermeture par son ressort d'obturation (59) à l'encontre de la réaction dudit ressort d'obturation (55) du clapet le plus à l'intérieur (53) par une force de réaction suffisante pour interdire l'ouverture du clapet le plus à l'extérieur (57) sous le seul effet de la réaction du ressort d'obturation (55) du clapet le plus à l'intérieur (53) combinée aux réactions de frottement exercées entre les deux clapets concentriques (53, 57).

**Patentansprüche**

1. Druckmittelservomotor, insbesondere anwendbar auf die Servosteuerung eines beweglichen Teils wie einen Kupplungshebel (8) welcher in einem Servozylinder (11) - körper (12) einen Servokolben (18) enthält, welcher auf das genannte Teil wirkt und geeignet ist dem Druck eines von einem in dem Kolben (18) enthaltenen sich selbst regelnden Druckminderventil gelieferten Druckmittel ausgesetzt zu werden, wobei die Verbindung zwischen einer Trittplatte (2) oder einem Handbedienungshebel des Servomotors und dem Servo-kolben durch einen im Innern des Kolbens eingebauten und einstückig mit einem Öffnungsstössel (65) des Druckminderventils verbundenen Schaft hergestellt ist, wobei der Schaft (6), welcher unter Einwirkung der Trittplatte (2) im Innern des Servokolbens (18) beweglich ist, geeignet ist, einseitig auf eine entsprechende im Kolben eingelassene Auflagefläche aufzuliegen, wenn eine Klappe des Druckminderventils vollständig geöffnet ist, um dem Servokolben (18) zu folgen, welcher auf dem Kupplungshebel (8) aufliegen wird, dadurch gekennzeichnet, dass das Druckminderventil einen Ventilblock (34) mit zwei verschiedenen Durchlassquerschnitten (62, 58, 60) zum Einlassen des Druckmittels in den Servozylinder (11) enthält und dass die kleinere (62) der zwei Durchlassquerschnitte nach einem ersten Steuerungslauf des Schaftes geöffnet werden kann während die grössere (58, 60) der zwei Durchlassquerschnitte nach einem zweiten zum ersten hinzukommenden Lauf des Schaftes (6) geöffnet werden kann und, dass mindestens eine Klappe (57) des Ventilblocks (34) nach dem genannten zweiten Lauf auf den Servokolben (43, 18, 25) stossen kann, um diesen dazu zu zwingen, der Bewegung des Schaftes zu folgen.

2. Servomotor nach dem Patentanspruch 1, dadurch gekennzeichnet, dass der grösste Durchlassquerschnitt (58, 60) nur nach Aufwendung eines Druckes, welcher um einen signifikanten Betrag über dem liegt, welcher ein Öffnen des kleinsten Durchlassabschnittes (62) erlaubt, geöffnet werden kann derart, dass die Öffnungsmöglichkeiten des grössten Durchlassquerschnittes noch mehr begrenzt werden.

3. Servomotor nach einer der Patentanspüche 1 oder 2, dadurch gekennzeichnet, dass der Ventilblock (34) des Servodruckminderventils zwei konzentrische ringförmige von dem Schaft (6) durchdrungene Klappen (53, 57) enthält, welche teleskopartig ineinander gelegen sind, von denen die eine auf der Aussenseite der andern hochschiebbar angeordnet ist und von denen die ringförmige Dichtungsfläche einer jeden in der Lage ist, unter Einwirkung einer Verschlussfeder (55, 59) auf einem ringförmigen Verschlussitz (56, 60) zum Aufliegen zu kommen, wobei die am weitesten im Innern befindliche Klappe (53), welche den kleinsten Durchlassquerschnitt (62) öffnen kann, sich im wesentlichen im Gleichgewicht befindet mit dem Druck des Druckmittelvorrats (21) und einerseits gegen ihre Verschlussfeder (55) vom Öffnungsstössel (65, 66) des Druckminderventils zurückgedrückt werden kann, wobei sie gleichzeitig den Auslass des Druckminderventils verschliesst und anderseits sich anschliessend ablösen kann von ihrem ringförmigen Dichtungssitz (56) um mit dem Zylinder (12) eine zwischen den zwei Klappen (53, 57) begrenzte und mit dem Druckmittelvorrat (21) über einen engen Durchlass (62), welcher insbesondere den k leinsten Durchlassquerschnitt definiert, verbundene Zwischenkammer zu verbinden und dadurch, dass die Fortsetzung des Öffnungslaufes des Öffnungsstössels (65, 66) in der Lage ist, die am weitesten innen liegende Klappe (53) auf die andere (57) der zwei Klappen aufstossen zu lassen und die Trennung dieser anderen Klappe von ihrem ringförmigen Dichtungssitz (60) zu bewirken um in Umgehung des genannten engen Durchlasses (62) den Druckmittelvorrat (21) über den genannten grossen Durchlassquerschnitt (58, 60) mit der Druckkammer (28) des Zylinders (12) zu verbinden.

4. Servomotor nach dem Patentanspruch 3, dadurch gekennzeichnet, dass der enge Durchlass ein kalibriertes Loch (62) ist, welches radial in die seitliche Wand der am weitesten aus sen liegenden Klappe (57) in einem Bereich wo diese Wand die geringste Dicke aufweist, eingelassen wird.

5. Servomotor nach einem der Patentansprüche 3 oder 4, dadurch gekennzeichnet, dass die am weitesten innen liegende Klappe (53) auf seiner Peripherie dicht verschlossen die andere Klappe (57) auf einer äusseren Sitzfläche (53a, 53b) der am weitesten innen liegenden Klappe trägt, welche im wesentlichen den gleichen Durchmesser hat wie die ringförmige Dichtungsfläche ihres Dichtungssitzes (56) derart dass die besagte am weitesten innen liegende Klappe (53) ins Gleichgewicht gebracht wird mit dem Druck des Druckmittelvorrats (21) und dass die Fläche des ringförmigen Dichtungssitzes (60) der anderen Klappe grösser ist als die der am weitesten innen gelegenen Klappe (53), um so eine Zwischenkammer (61) mit zwei ringförmigen, konzentrischen, unterschiedlichen Dichtungsflächen abzugrenzen, derart dass unmittelbar nach Öffnen der inneren Klappe (53), der Druck in dieser Zwischenkammer (61) sinkt, welche nun mit der Druckkammer (28) des Servozylinders (12) durch einen verhältnismässig grossen ringförmigen Durchlassquerschnitt, welcher zwischen dem ringförmigen Dichtungssitz (56) und der ringförmigen Dichtungsfläche (54) der besagten inneren Klappe (53) freigegeben wird, verbunden ist, während die Zwischenkammer (61) mit dem Druckmittelvorrat (21) nur über den engen Durchlass (62) verbunden ist und das Schliessen der am weitesten aus sen liegenden Klappe (57) durch ihre Verschlussfeder (59) durch den Druck des Druckmittelvorrats (21) nach Öffnen der am weitesten innen liegenden Klappe (53) betätigt wird und das Öffnen dieser am weitesten aussen liegenden Klappe (57) mit grossem Durchlassquerschnitt vorübergehend schwieriger gestaltet wird.

6. Servomotor nach einem der Patentansprüche 3 bis 5, dadurch gekennzeichnet, dass die Verschlussfeder (55) der am weitesten innen liegenden Klappe (53) auf der am weitesten aus sen liegenden Klappe (57), welche den grössten Durchlassquerschnitt verschliessen kann, aufliegt und dadurch, dass diese am weitesten aussen liegende Klappe (57) in Schliesslage gegen die Gegenkraft der besagten Verschlussfeder (55) der am weitesten innen liegenden Klappe (53) durch eine Reaktionskraft, die ausreicht, ein Offnen der am weitesten aussen liegenden Klappe (57) unter der ausschliesslichen Einwirkung der Gegenkraft der Verschlussfeder (55) der am weitesten innen liegenden Klappe (53) verbunden mit den zwischen den beiden konzentrischen Klappen (53, 57) ausgeübten Reibungskräften, durch ihre Verschlussfeder (59) gedrückt wird.

**Claims**

1. Fluid pressure servo motor, for use especially for assisted control of a movable member such as a clutch lever (8), of the type comprising in a servo cylinder body (11), a servo piston (18) acting on the said member and adapted to be subjected to the pressure of pressurized fluid supplied by a self-lapping valve included in the servo piston (18), the coupling between a pedal (2) or a manually actuating lever of the servo motor and the servo piston being constituted by a servo rod (6) mounted inside the servo piston and integral with an actuating pushrod (65), of the self-lapping valve (18) under the action of the pedal (2) being adapted to abut unilaterally upon a corresponding bearing surface provided in the servo piston, when a valve plate of the self-lapping valve is in fully open position, in order to follow in its stroke the servo piston (18) that abuts on the clutch lever (8), characterized in that the self-lapping valve comprises a valve plate unit (34) having two distinct passage sections (62, 58, 60) for intake of the pressurized fluid in the servo cylinder (11), and in that the smaller (62) of the two passage sections is adapted to be open after a first control stroke of the servo rod (6) while the larger (58, 60) of the two passage sections is adapted to be opended after a second stroke of the servo rod (6) being added to the first stroke and in that at least one valve plate (57) of the valve plate unit (34) is adapted, after completing the said second stroke to arrive in abutment on the servo piston (43, 18, 25) so as to compel the piston to follow the movement of the servo rod (6).

2. Servo motor according to claim 1, characterized in that the large section passage (58, 60) is adapted to be opened only after application by the servo rod (6) of a force greater by a significant value than that allowing to open the smaller passage section (62), so as to limit even further the opening possibilities of the large passage section.

3. Servo motor according to one of claims 1 or 2, characterized in that the valve plate unit (34) of the self-lapping valve comprises two concentric annular valves (53, 57) crossed through by the servo rod (6), telescopically mounted one outside the other and of which the ring sealing surface of each is adapted to abut, under the action of a sealing spring (55, 59) upon an annular sealing seat (56, 60), the inner valve plate (53) adapted to open the smaller passage section (62), being substantially balanced with respect to the pressure of the pressurized fluid supply (21) and adapted, on the one hand, to be urged against its sealing spring (55) by the actuating push rod (65, 66) of the pressure reducer sealing at the same time the exhaust of the pressure reducer and, on the other hand, of thereafter being separated from its annular sealing seat (56) in order to connect to the servo cylinder (12) an intermediary chamber (61) delimited between the two valve plates (53, 57) and connected to the pressurized fluid supply by a constricted passage (62) mainly defining the smaller passage section and in that the continuation of the opening stroke of the actuating push rod (65, 66) is adapted to be apply the inner valve plate (53) in abutment on the other (57) of the two valve plates and to provoke the separation of this other valve plate from its sealing annular seat (60) in order to connect, in short circuit of the said constricted passage (62) through the wide passage section (58, 60), the pressurized fluid supply to the pressure chamber (28) of the servo cylinder (12).

4. Servo motor according to claim 3, characterized in that the constricted passage is a calibrated hole provided radially in the lateral wall of the outer valve plate (57) in a zone where this wall presents a minimal thickness.

5. Servo motor according to one of claims 3 or 4, characterized in that the inner valve plate (53) bears, on its periphery and in a sealed manner the other valve plate (57) on an external cylindrical bearing (53a, 53b) (of the said inner valve plate) presenting substantially the same diameter as that of the annular sealing surface of its sealing seat (56), so as to balance the said inner valve plate (53) with respect to the pressure of the pressurized fluid supply (21) and in that the surface of the annular sealing seat (60) of the other valve plate is larger than that of the inner valve plate (53) in order thus to delimit an intermediary chamber (61) having two concentric and distinct annular sealing surfaces, whereby immediately after opening the inner valve plate (53), the pressure drops in this intermediary chamber (61) then connected to the pressure chamber (28) of the servo cylinder (12) by a relatively large passage section open between the annular sealing seat (56) and the annular sealing surface (54) of the said inner valve plate (53), whereas the intermediary chamber (61) is only connected to the pressurized fluid supply (21) through the constricted passage (62) and that therefore the closing of the outer valve plate (57) by its sealing spring (59) is confirmed by the pressure of the fluid source (21) after opening of the inner valve plate (53) and that the opening of this outer valve plate (57) having a large passage section in rendered temporarily more difficult.

6. Servo motor according to one of claims 3 to 5, characterized in that the sealing spring (55) of the inner valve plate (53) rests on the outer valve plate (57) adapted to seal the wider passage section and in that the outer valve plate (57) is pushed into closing position by its sealing spring (59) against the reaction of the said sealing spring (55) of the inner valve plate (53) by a reaction force sufficient to block the opening of the outer valve plate (57) under the simple effect of the reaction of the sealing spring (55) of the inner valve plate (53) combined with the friction reactions exerted between the two concentric valves (53, 57).